# EUROPEAN PATENT SPECIFICATION

(11) **EP 3 624 479 B1**
(45) Date of publication and mention of the grant of the patent: **07.06.2023**
(21) Application number: 18799318.3
(22) Date of filing: 24.04.2018
(51) Int. Cl.: H04B 7/185, B64C 13/18, B64C 13/20, B64D 27/24, B64F 1/00, B64F 3/00, H04W 16/30, H04W 84/18, H04W 88/08

(54) **INTER-HAPS COMMUNICATION AND HIGH-CAPACITY MULTI-CELL HAPS FOR CONSTRUCTING THREE-DIMENSIONALLY FORMED NETWORK OF FIFTH-GENERATION COMMUNICATION**
INTER-HAPS-KOMMUNIKATION UND HOCHKAPAZITÄTS-MULTI-CELL-HAPS ZUM AUFBAU EINES DREIDIMENSIONAL GEBILDETEN NETZWERKS DER FÜNFTEN GENERATION DER KOMMUNIKATION
COMMUNICATION INTER-HAPS ET HAPS MULTICELLULAIRES À HAUTE CAPACITÉ POUR LA CONSTRUCTION D'UN RÉSEAU TRIDIMENSIONNEL DE COMMUNICATION DE CINQUIÈME GÉNÉRATION

(30) Priority: 12.05.2017 JP 2017095412
(43) Date of publication of application: 18.03.2020
(73) Proprietor: SoftBank Corp., Tokyo 105-7529 (JP)
(72) Inventor: MIYAKAWA, Junichi, Tokyo 105-7317 (JP); KIMURA, Kiyoshi, Tokyo 105-7317 (JP)
(74) Representative: SSM Sandmair
(86) International application number: PCT/JP2018/016573
(87) International publication number: WO 2018/207612

(56) References cited:
- GB-A- 2 542 163
- JP-A- 2011 166 680
- JP-A- 2012 235 439
- US-A1- 2005 007 257
- US-A1- 2015 122 947
- US-A1- 2016 046 387
- US-A1- 2016 050 011
- US-A1- 2016 156 406
- US-A1- 2016 156 406

## Description

### TECHNICAL FIELD

The present invention relates to an inter-HAPS communication and a high-capacity multi-cell moored airship-type HAPS, which construct a three-dimensionalized network of the fifth-generation communication.

### BACKGROUND ART

There is conventionally known of a communication standard called the LTE-Advanced Pro (refer to Non-Patent Literature 2), which has been developed from the LTE (Long Term Evolution)-Advanced (refer to Non-Patent Literature 1) of the 3GPP that is a communication standard of a mobile communication system. In this LTE-Advanced Pro, specifications for providing communications to devices for the IoT (Internet of Things) in recent years have been formulated. Furthermore, the fifth-generation mobile communication coping with a simultaneous connection to a large number of terminal apparatuses (also called as "UE (user equipment)", "mobile station", "communication terminal") such as devices for the IoT, a reduction of delay time, etc. is being studied (for example, refer to Non-Patent Literature 3).
Document GB 2542163 A discloses an apparatus or process suitable for forming a plurality of simultaneous communication signals between (a) a plurality of phased array antennas each mounted on a respective high altitude platform (HAP) and (b) a phased array antenna mounted on equipment at a lower altitude than that of the HAPs.
Document US 2016/0156406 A1 discloses airborne wireless service system including an airborne fleet, comprised of a plurality of aircraft, wherein the airborne fleet is configured to transmit a plurality of first beams at a first radio frequency (RF), wherein neighboring first beams have an overlap region, and wherein at least one of the following characteristics is different between the neighboring first beams: frequency band, channel, or transmission format.

### CITATION LIST

### NON-PATENT LITERATURE

Non-Patent Literature 1: 3GPP TS 36.300 V10.12.0 (2014-12).
Non-Patent Literature 2: 3GPP TS 36.300 V13.5.0 (2016-09).
Non-Patent Literature 3: G Romano, "3GPP RAN progress on "5G"", 3GPP, 2016.

### SUMMARY OF INVENTION

### TECHNICAL PROBLEM

In the foregoing mobile communications of the fifth generation or the like, there is a problem that it is desired to provide a highly robust communication system capable of stably realizing a three-dimensionalized network over a wide area, in which a propagation delay is low, a simultaneous connection with a large number of terminals in a wide-range area and a high-speed communication can be performed, and a system capacity per unit area is large, in radio communications with terminal apparatuses including devices for the IoT.

### SOLUTION TO PROBLEM

A communication system according to an aspect of the present invention is a communication system as claimed in claim 1.

In the foregoing communication system, the plurality of first radio relay stations may form a radio communication network configured with a two-dimensional or three-dimensional mesh topology. In the foregoing communication system, when any one of the plurality of first radio relay stations fails, another radio relay station may back up and perform a radio relay.

In the foregoing communication system, a communication between the plurality of first radio relay stations may be a radio communication using a laser light. Here, each of the plurality of first radio relay stations may control a direction and intensity of the laser light according to a change of position relative to another neighboring first radio relay station. Each of the plurality of first radio relay stations may be controlled to switch another first radio relay station performing a communication using the laser light according to a change of position relative to another neighboring first radio relay station. Each of the plurality of first radio relay stations may control to reduce an intensity of the laser light in a time period of night.

In the foregoing communication system, a remote control apparatus may be provided to control a position of the first radio relay station installed in the first floating object, a direction and divergence angle of a beam formed by the first radio relay station.

### ADVANTAGEOUS EFFECTS OF INVENTION

According to the present invention, in the foregoing mobile communications of the fifth generation, a highly robust communication system capable of stably realizing a three-dimensionalized network over a wide area can be provided, in which a propagation delay is low, a simultaneous connection with a large number of terminals in a wide-range and a high-speed communication can be performed, and a system capacity per unit area is large, in radio communications with terminal apparatuses including devices for the IoT.

### BRIEF DESCRIPTION OF DRAWINGS

[FIG. 1] FIG. 1 is a schematic configuration diagram showing an example of an overall configuration of a communication system that realizes a three-dimensionalized network according to an embodiment.
[FIG. 2] FIG. 2 is a perspective view showing an example of HAPS used in the communication system in the embodiment.
[FIG. 3] FIG. 3 is a side view showing another example of HAPS used in the communication system in the embodiment.
[FIG. 4] FIG. 4 is an explanatory diagram showing an example of a radio network formed in an upper airspace by a plurality of HAPSs in the embodiment.
[FIG. 5] FIG. 5 is a block diagram showing a configuration example of radio relay stations of HAPSs in the embodiment.
[FIG. 6] FIG. 6 is a block diagram showing another configuration example of radio relay stations of HAPSs in the embodiment.
[FIG. 7] FIG. 6 is a block diagram showing still another configuration example of radio relay stations of HAPSs in the embodiment.
[FIG. 8] FIG. 8 is a schematic configuration diagram showing an example of an overall configuration of a communication system that realizes a three-dimensionalized network according to another embodiment.
[FIG. 9] FIG. 9 is a schematic configuration diagram showing an example of an overall configuration of a communication system that realizes a three-dimensionalized network according to the present invention.
[FIG. 10] FIG. 10 is a block diagram showing a configuration example of a radio relay station of a moored HAPS in the communication system of FIG. 9.
[FIG. 11] FIG. 11 is an explanatory view showing an example of a radio communication network in the embodiment, in which a plurality of solar plane-type HAPSs and a moored HAPS for large-capacity multi-cells are arranged in upper airspaces of over Japan.
[FIG. 12] FIG. 12 is a schematic configuration diagram showing an example of an overall configuration of a communication system that realizes a three-dimensionalized network according to still another embodiment.

### DESCRIPTION OF EMBODIMENTS

Hereinafter, embodiments will be described with reference to the drawings. While several embodiments and/or examples have been disclosed in the following description, the subject-matter for which protection is sought is strictly and solely limited to those embodiments encompassed by the appended claims. Embodiments mentioned in the description that do not fall under the scope of the claims are useful for understanding of the invention. Particularly, it is noted that the embodiments described in relation to fig . 1 and 8 do not fall under the scope of the claimed invention.

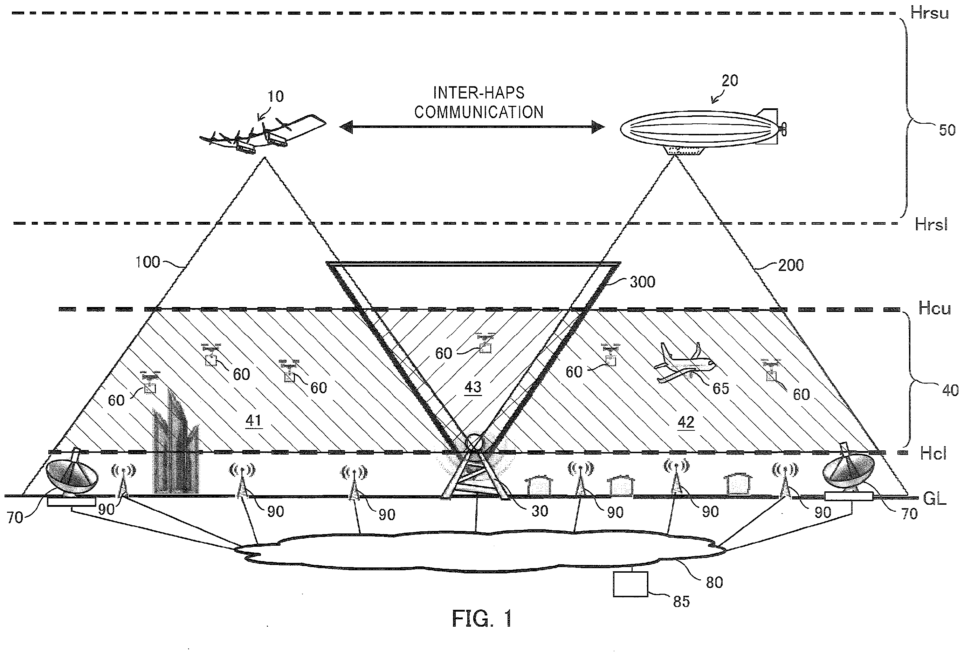

FIG. 1 is a schematic configuration diagram showing an example of an overall configuration of a communication system according to an embodiment. The communication system according to the present embodiment is suitable for realizing a three-dimensionalized network of the fifth-generation mobile communication corresponding to a simultaneous connection to a large number of terminal apparatuses (also referred to as "mobile station", "mobile device" or "user equipment (UE)"), low delay method, etc. It is noted that, the mobile communication standard applicable to a communication system, a radio relay station, a base station, a repeater, and a terminal apparatus disclosed in this description, includes the fifth-generation mobile communication standard and next generation mobile communication standards after the fifth generation.

As shown in FIG. 1, a communication system is provided with a plurality of High Altitude Platform Stations (HAPS) (also referred to as "High Altitude Pseudo Satellite") 10 and 20 as radio relay apparatuses, and forms three-dimensional cells (three-dimensional areas) 41 and 42 as indicated by hatching areas in the figure in a cell-formation target airspace 40 at a predetermined altitude. Each of the HAPSs 10 and 20 is a floating object (for example, solar plane, airship) including a radio relay station mounted therein, which is controlled to be floated and located in a floating airspace (hereinafter also simply referred to as "airspace") 50 with high altitude of 100 [km] or less from the ground level or the sea level by an autonomous control or an external control.

The airspace 50 in which the HAPSs 10 and 20 are located is, for example, a stratospheric airspace with altitude greater than 11 [km] and less than 50 [km]. The airspace 50 in which the HAPSs 10 and 20 are located may be an airspace in the altitude range of 15 [km] or more and 25 [km] or less where weather conditions are relatively stable, and may be an airspace with altitude of about 20 [km] in particular. Each of Hrsl and Hrsu in the figure indicates relative altitudes of the lower end and the upper end of the airspace 50 with reference to the ground level (GL), in which the HAPSs 10 and 20 are located.

The cell-formation target airspace 40 is a target airspace for forming a three-dimensional cell with one or more HAPSs according to the communication system of the present embodiment. The cell-formation target airspace 40 is an airspace in a predetermined altitude range (for example, altitude range of 50 [m] or more and 1000 [m] or less) located between the airspace 50 where the HAPSs 10 and 20 are located and a cell-formation area near the ground level covered by a base station 90 such as a conventional macro-cell base station. Each of Hcl and Hcu in the figure indicates relative altitudes of the lower end and the upper end of the cell-formation target airspace 40 with reference to the ground level (GL).

It is noted that, the cell-formation target airspace 40 where the three-dimensional cell of the present embodiment is formed may be an airspace over the sea, a river or a lake.

The radio relay stations of the HAPSs 10 and 20 respectively form beams 100 and 200 for a radio communication with the terminal apparatus that is a mobile station, toward the ground level. The terminal apparatus may be a communication terminal module incorporated in a drone 60 that is an aircraft such as a small helicopter capable of remotely steering, or may be a user terminal apparatus used by a user in the airplane 65. The areas through which the beams 100 and 200 pass in the cell-formation target airspace 40 are three-dimensional cells 41 and 42. The plurality of beams 100 and 200 adjacent to each other in the cell-formation target airspace 40 may be partially overlapped with each other.

Each of the radio relay stations of the HAPSs 10 and 20 is connected to a core network of a mobile communication network 80 via a feeder station (gateway) 70 that is a relay station installed on the ground or on the sea. A communication between the HAPSs 10 and 20 and the feeder station 70 may be performed by a radio communication using radio waves such as microwaves, or may be performed by an optical communication using a laser light or the like.

Each of the HAPSs 10 and 20 may autonomously control its own floating movement (flight) or a processing at the radio relay station, by executing a control program with a control section including a computer or the like incorporated in the inside of the HAPS. For example, each of the HAPSs 10 and 20 may acquire its own current position information (for example, GPS position information), position control information (for example, flight schedule information) stored in advance, and position information on another HAPS located in a peripheral space, etc., and autonomously control the floating movement (flight) and the processing in the radio relay station base on these information.

The floating movement (flight) of each HAPS 10 and 20 and processing in the radio relay stations may be controlled by a remote control apparatus 85 of a communication operator, which is disposed in a communication center or the like of the mobile communication network 80. In this case, the HAPSs 10 and 20 may include a communication terminal apparatus for control (for example, a mobile communication module) so that control information from the remote control apparatus 85 can be received, and terminal identification information (for example, IP address, telephone number, etc.) may be allocated to the terminal communication apparatus so as to be identified from the remote control apparatus 85. The MAC address of the communication interface may be used for identification of the communication terminal apparatus for control. Each of the HAPSs 10 and 20 may transmit information relating to the floating movement (flight) of the HAPS itself or the surrounding HAPS and the processing at the radio relay station, and information such as observation data acquired by various types of sensors or the like, to a predetermined destination such as the remote control apparatus 85.

In the cell-formation target airspace 40, there is a possibility that a spatial area where the beams 100 and 200 of the HAPSs 10 and 20 do not pass may occur, in which the three-dimensional cells 41and 42 are not formed. In order to spatially complement this area, as shown in the configuration example of FIG. 1, a base station (hereinafter referred to as "ATG station") 30 may be disposed, which forms a three-dimensional cell 43 by forming a radial beam 300 from the ground or the sea side upward to make an ATG (Air To Ground) connection.

By adjusting the positions of the HAPSs 10 and 20 and the divergence angle (beam width) etc. of the beams 100 and 200 without using the ATG station, the radio relay stations of the HAPSs 10 and 20 may form the beams 100 and 200 covering the overall upper end face of the cell-formation target airspace 40 so that three-dimensional cells are formed all over the cell-formation target airspace 40.

It is noted that, the three-dimensional cell formed by the HAPSs 10 and 20 may be formed so as to reach the ground level or the sea level so as to be able to communicate also with the terminal apparatus located on the ground or on the sea.

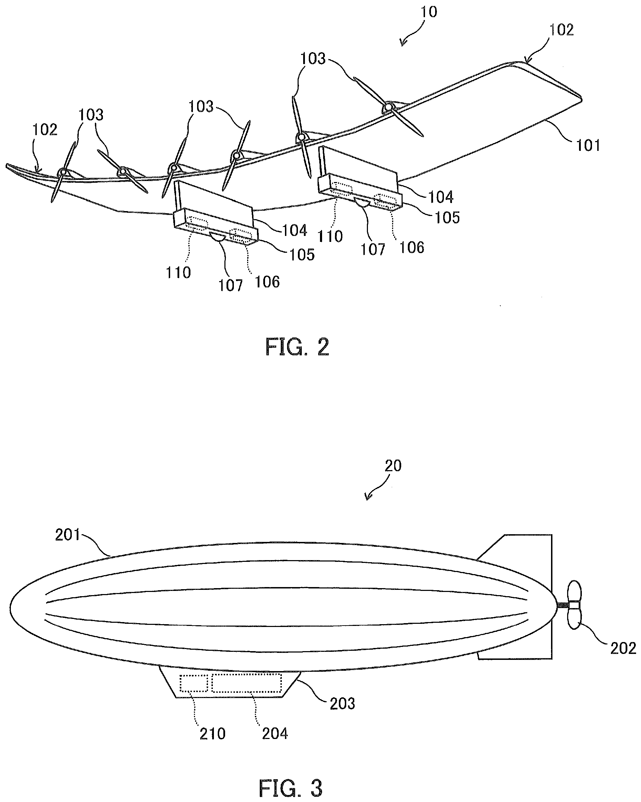

FIG. 2 is a perspective view showing an example of the HAPS 10 used in the communication system in the embodiment. The HAPS 10 in FIG. 2 is a solar plane-type HAPS. he HAPS 10 has a main wing section 101 in which a solar-power generation panel (hereinafter referred to as "solar panel") 102 as a photovoltaic power generation section having a photovoltaic power generation function is provided on the upper surface and both end portions in the longitudinal direction are warped upward, and a plurality of motor-driven propellers 103 as a propulsion apparatus of a bus-motive power system provided at one end edge portion of the main wing section 101 in the lateral direction. Pods 105 as a plurality of apparatus accommodating sections for accommodating the mission equipment are connected to the two positions in the longitudinal direction of the lower surface of the main wing section 101 via a plate-like connecting section 104. Inside each pod 105, a radio relay station 110 as a mission equipment and a battery 106 are accommodated. On the lower surface side of each pod 105, wheels 107 used on departure and arrival are provided. The electric power generated by the solar panel 102 is stored in the battery 106, the motor of the propeller 103 is rotationally driven by the electric power supplied from the battery 106, and the radio relay processing by the radio relay station 110 is executed.

The solar plane-type HAPS 10 can float with lift force by, for example, performing a turning flight or performing a flight along a figure of "8", and can float to stay in a predetermined range in the horizontal direction at a predetermined altitude. It is noted that, the solar plane-type HAPS 10 can also fly like a glider when the propeller 103 is not rotationally driven. For example, when electric power of the battery 106 is surplus by power generation of the solar panel 102, such as in daytime, the solar plane-type HAPS 10 rises to a high position. And when electric power cannot be generated by the solar panel 102 such as at night, the solar plane-type HAPS 10 can stop power supply from the battery 106 to the motor and can fly like a glider.

FIG. 3 is a side view showing another example of the HAPS 20 used in a communication system in the embodiment. The HAPS 20 in FIG. 3 is an unmanned airship-type HAPS, and can mount a large capacity battery since the payload is large. The HAPS 20 has an airship body 201 filled with gas such as helium gas for floating by floating power, a propeller 202 driven by a motor as a propulsion apparatus of a bus-motive power system, and an equipment accommodating section 203 in which the mission equipment is accommodated. A radio relay station 210 and a battery 204 are accommodated in the equipment accommodating section 203. A motor of the propeller 202 is rotationally driven by an electric power supplied from the battery 204, and a radio relay processing by the radio relay station 210 is executed.

It is noted that, a solar panel having a photovoltaic power generation function may be provided on the top surface of the airship body 201, and an electric power generated by the solar panel is stored in the battery 204.

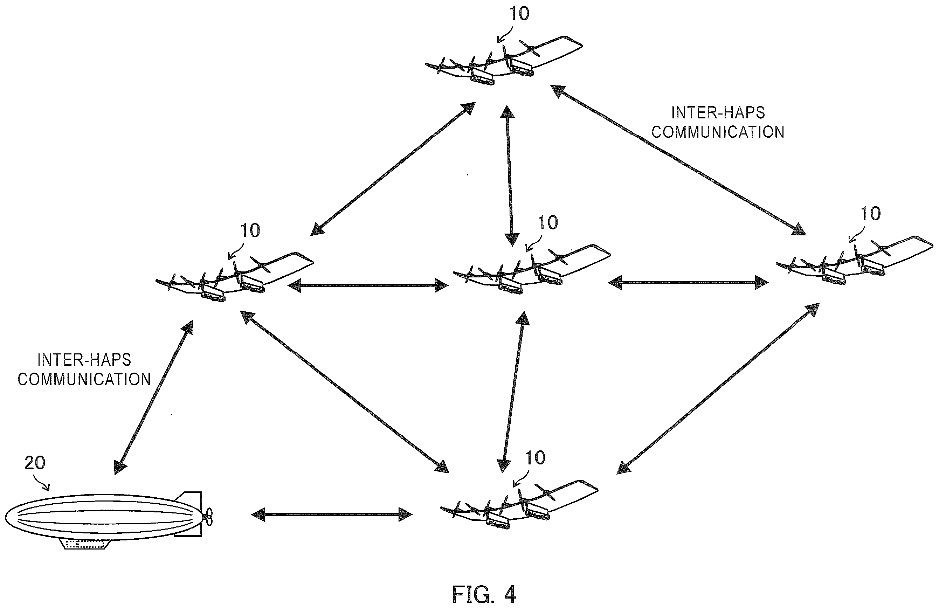

FIG. 4 is an explanatory diagram showing an example of a radio network formed in an upper airspace by the plurality of HAPSs 10 and 20 in the embodiment. The plurality of HAPSs 10 and 20 are configured to be able to communicate with each other (inter-HAPS communication) in the upper airspace, and form a radio communication network excellent in robustness which is capable of stably realizing a three-dimensionalized network over a wide area. The radio communication network can also function as an ad hoc network by dynamic routing according to various types of environment and information. The radio communication network may be formed so as to have various types of two-dimensional or three-dimensional topologies, and may be, for example, a mesh-type radio communication network as shown in FIG. 4.

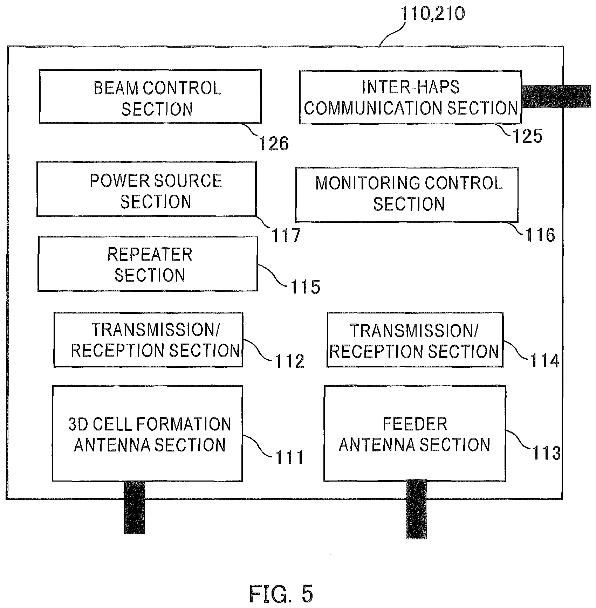

FIG. 5 is a block diagram showing a configuration example of the radio relay stations 110 and 210 of the HAPSs 10 and 20 in the embodiment. The radio relay stations 110 and 210 in FIG. 5 are examples of a repeater-type radio relay station. Each of the radio relay stations 110 and 210 includes a 3D cell (three-dimensional cell)-formation antenna section 111, a transmission/reception section 112, a feeder antenna section 113, a transmission/reception section 114, a repeater section 115, a monitoring control section 116 and a power source section 117. Further, each of the radio relay stations 110 and 210 includes an inter-HAPS communication section 125 and a beam control section 126.

The 3D cell-formation antenna section 111 has antennas for forming radial beams 100 and 200 toward the cell-formation target airspace 40, and forms three-dimensional cells 41 and 42 in which a communication with the terminal apparatus can be performed. The transmission/reception section 112 has a transmission/reception duplexer (DUP: DUPlexer) and an amplifier, etc., and transmits radio signals to the terminal apparatuses located in the three-dimensional cells 41 and 42 and receives radio signals from the terminal apparatuses via the 3D cell-formation antenna section 111.

The feeder antenna section 113 has a directional antenna for performing a radio communication with the feeder station 70 on the ground or on the sea. The transmission/reception section 114 has a transmission/reception duplexer (DUP: DUPlexer) and an amplifier, etc., and transmits radio signals to the feeder station 70 and receives radio signals from the feeder station 70 via the 3D cell-formation antenna section 111.

The repeater section 115 relays signals of the transmission/reception section 112 which is transmitted to and received from the terminal apparatus and signals of the transmission/reception section 114 which is transmitted to and received from the feeder station 70. The repeater section 115 may have a frequency conversion function.

The monitoring control section 116 is configured with, for example, a CPU and a memory, etc., and monitors the operation processing status of each section and controls each section in the HAPSs 10 and 20, by executing the preinstalled program. The power source section 117 supplies an electric power outputted from the batteries 106 and 204 to each section in the HAPSs 10 and 20. The power source section 117 may have a function of storing an electric power generated by the solar-power generation panel, etc. and an electric power supplied from outside in the batteries 106 and 204.

The inter-HAPS communication section 125 communicates with other neighboring HAPSs 10 and 20 via a radio communication medium such as a laser light or a microwave. This communication enables a dynamic routing that dynamically relays a radio communication between the mobile communication network 80 and a terminal apparatus such as the drone 60, and can enhance a robustness of the mobile communication system by backing up and performing a radio relaying by the other HAPS when one of the HAPSs fails.

Although various types of radio communication media such as a laser light or a microwave can be used as a radio communication medium for the inter-HAPS communication, the radio communication medium may be selected according to an altitude where the HAPS is located. For example, when the HAPSs 10 and 20 are located at a relatively high altitude where an influence of clouds is small, the laser light may be used for the inter-HAPS communication. When the HAPSs 10 and 20 are located at a low altitude where the influence of clouds is large, the microwave that is not easily affected by the clouds may be used for the inter-HAPS communication.

The beam control section 126 controls a direction and intensity of a beam such as a laser light or a microwave used for the inter-HAPS communication, and performs a control so as to switch another HAPS (radio relay station) that performs communication by a beam such as a laser light or a microwave according to a change of position relative to another neighboring HAPS (radio relay station). This control may be performed based on, for example, a position and attitude of the HAPS itself, a position of the neighboring HAPS, etc. Information on the position and attitude of the HAPS itself may be acquired based on an output of a GPS receiver, a gyro sensor, an acceleration sensor, etc. incorporated in the HAPS, and information on the position of the neighboring HAPS may be acquired from the remote control apparatus 85 or another HAPS management server provided in the mobile communication network 80.

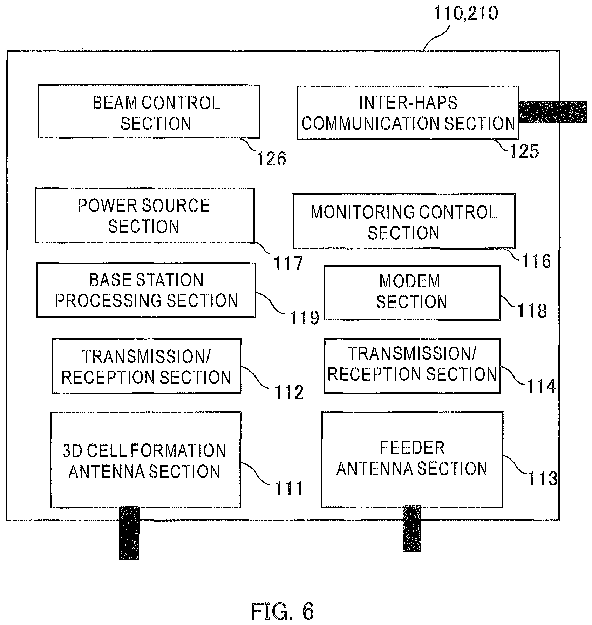

FIG. 6 is a block diagram showing another configuration example of the radio relay stations 110 and 210 of the HAPSs 10 and 20 in the embodiment. The radio relay stations 110 and 210 in FIG. 6 are examples of a base-station type radio relay station. It is noted that, in FIG. 6, configuration elements similar to those in FIG. 5 are denoted by the same reference numerals and explanation thereof will be omitted. Each of the radio relay stations 110 and 210 in FIG. 6 further includes a modem section 118 and a base station processing section 119 instead of the repeater section 115. Further, each of the radio relay stations 110 and 210 includes an inter-HAPS communication section 125 and a beam control section 126.

The modem section 118, for example, performs a demodulation processing and a decoding processing for a received signal received from the feeder station 70 via the feeder antenna section 113 and the transmission/reception section 114, and generates a data signal to be outputted to the base-station processing section 119. The modem section 118 performs an encoding processing and a modulation processing for the data signal received from the base-station processing section 119, and generates a transmission signal to be transmitted to the feeder station 70 via the feeder antenna section 113 and the transmission/reception section 114.

The base-station processing section 119, for example, has a function as an e-Node B that performs a baseband processing based on a method conforming to the standard of LTE/LTE-Advanced. The base-station processing section 119 may process in a method conforming to a future standard of mobile communication such as the fifth generation or the next generation after the fifth generation onwards.

The base station processing section 119, for example, performs a demodulation processing and a decoding processing for a received signal received from a terminal apparatus located in the three-dimensional cells 41 and 42 via the 3D cell-formation antenna section 111 and the transmission/reception section 112, and generates a data signal to be outputted to the modem section 118. The base-station processing section 119 performs an encoding processing and a modulation processing for the data signal received from the modem section 118, and generates a transmission signal to be transmitted to the terminal apparatus of the three-dimensional cells 41 and 42 via the 3D cell-formation antenna section 111 and the transmission/reception section 112.

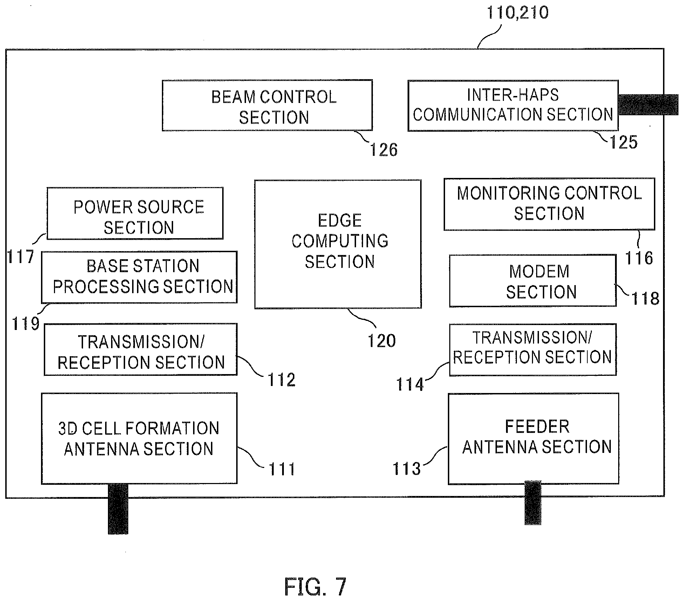

FIG. 7 is a block diagram showing still another configuration example of the radio relay stations 110 and 210 of the HAPSs 10 and 20 in the embodiment. The radio relay stations 110 and 210 in FIG. 7 are examples of a high performance base-station type radio relay station having an edge computing function. It is noted that, in FIG. 7, configuration elements similar to those in FIG. 5 and FIG. 6 are denoted by the same reference numerals, and explanation thereof will be omitted. Each of the radio relay stations 110 and 210 in FIG. 7 further includes an edge computing section 120 in addition to the configuration elements of FIG. 6.

The edge computing section 120 is configured with, for example, a compact computer, and can perform various types of information processing relating to a radio relay, etc., in the radio relay stations 110 and 210 of the HAPSs 10 and 20, by executing a preinstalled program.

The edge computing section 120, for example, determines a transmission destination of a data signal based on a data signal received from a terminal apparatus located in the three-dimensional cells 41 and 42, and performs a process of switching a relay destination of communication based on the determination result. More specifically, in case that the transmission destination of the data signal outputted from the base-station processing section 119 is a terminal apparatus located in the own three-dimensional cells 41 and 42, instead of passing the data signal to the modem section 118, the edge computing section 120 returns the data signal to the base-station processing section 119 and transmits the data signal to the terminal apparatus of the transmission destination located in the own three-dimensional cells 41 and 42. On the other hand, in case that the transmission destination of the data signal outputted from the base-station processing section 119 is a terminal apparatus located in another cell other than the own three-dimensional cells 41 and 42, the edge computing section 120 passes the data signal to the modem section 118 and transmits the data signal to the feeder station 70, and transmits the data signal to the terminal apparatus of the transmission destination located in the other cell of the transmission destination via the mobile communication network 80.

The edge computing section 120 may perform a process of analyzing information received from a large number of terminal apparatuses located in the three-dimensional cells 41 and 42. This analysis result may be transmitted to the large number of terminal apparatuses located in the three-dimensional cells 41 and 42, and may be transmitted to a server, etc. of the mobile communication network 80.

Uplink and downlink duplex methods for radio communication with a terminal apparatus via the radio relay stations 110 and 210 are not limited to a specific method, and may be, for example, a time division duplex method (Time Division Duplex: TDD) or a frequency division duplex method (Frequency Division Duplex: FDD). An access method for radio communication with a terminal apparatus via the radio relay stations 110 and 210 is not limited to a specific method, and may be, for example, FDMA (Frequency Division Multiple Access) method, TDMA (Time Division Multiple Access) method, CDMA (Code Division Multiple Access) method or OFDMA (Orthogonal Frequency Division Multiple Access). In the foregoing radio communication, a MIMO (Multi-Input and Multi-Output) technology may be used, which has functions of diversity/coding, transmission beam forming, spatial division multiplexing (SDM: Spatial Division Multiplexing), etc., and in which a transmission capacity per unit frequency can be increased by simultaneously using a plurality of antennas for both of transmission and reception. The MIMO technology may be an SU-MIMO (Single-User MIMO) technology in which one base station transmits a plurality of signals to one terminal apparatus at the same time/same frequency, and may be an MU-MIMO (Multi-User MIMO) technology in which one base station transmits signals to a plurality of different communication terminal apparatuses at the same time/same frequency or a plurality of different base stations transmit signals to one terminal apparatus at the same time/same frequency.

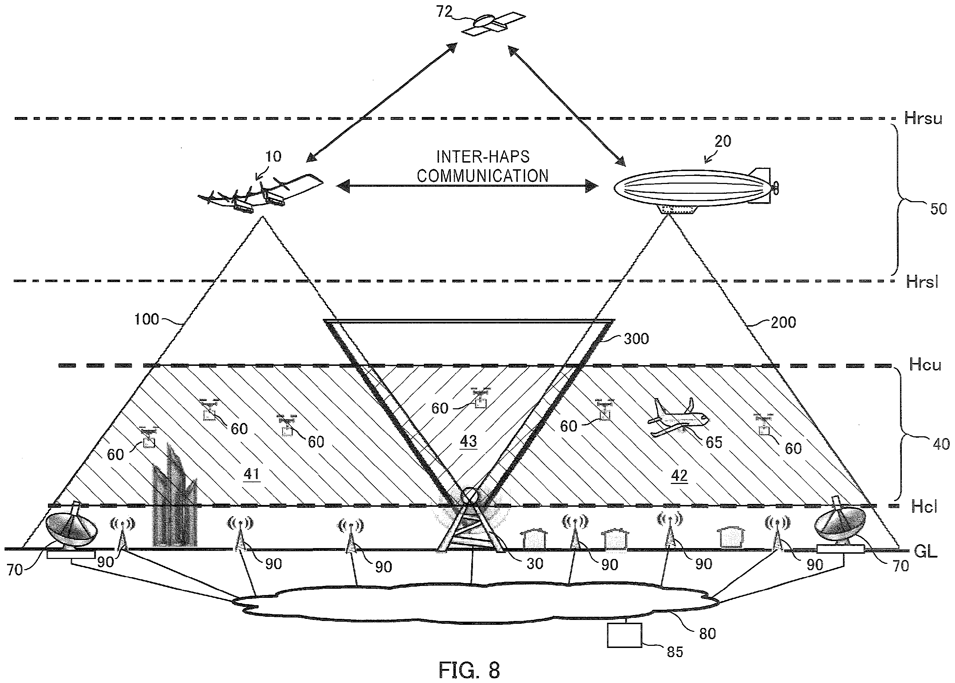

FIG. 8 is a schematic configuration diagram showing an example of an overall configuration of a communication system that realizes a three-dimensionalized network according to another embodiment. It is noted that, in FIG. 8, the parts common to those in FIG. 1 described above are denoted by the same reference numerals and a description thereof is omitted.

In the embodiment of FIG. 8, a communication between the HAPSs 10 and 20 and the feeder station 70 is performed via an artificial satellite 72. In this case, a communication between the artificial satellite 72 and the feeder station 70 may be performed by a radio communication using radio waves such as microwaves, or may be performed by an optical communication using a laser light or the like. Also, a communication between the HAPSs 10 and 20 and the artificial satellite 72 may be performed by a radio communication using radio waves such as microwaves, or may be performed by an optical communication using a laser light or the like.

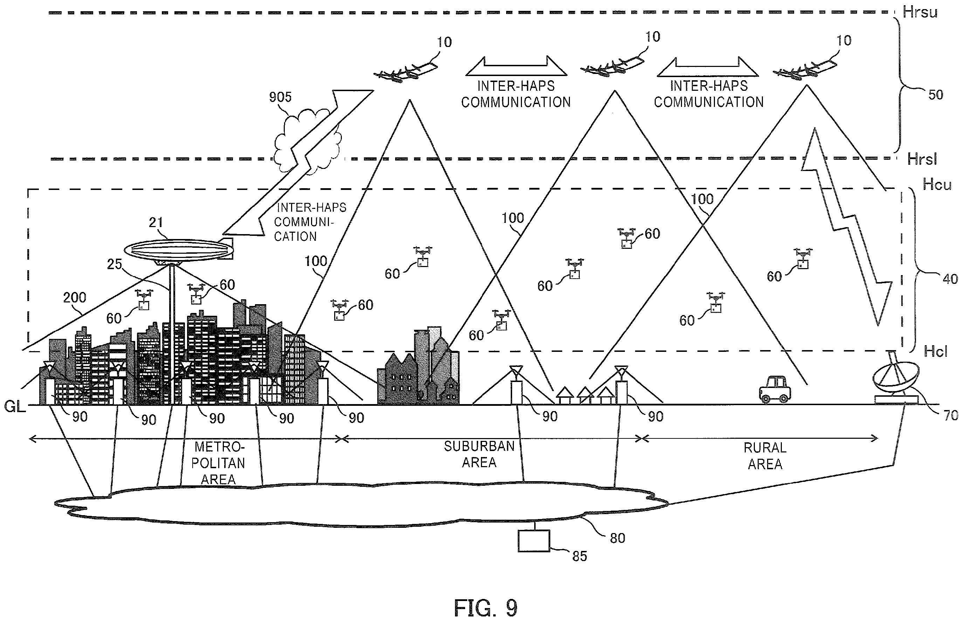

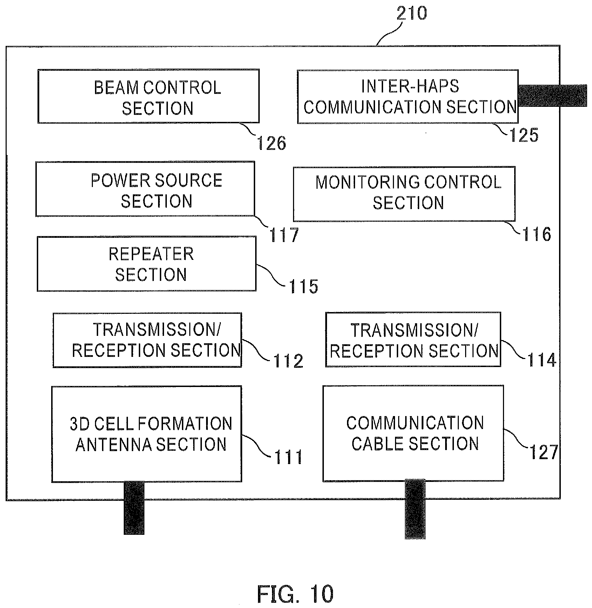

FIG. 9 is a schematic configuration diagram showing an example of an overall configuration of a communication system that realizes a three-dimensionalized network according to still another embodiment, and FIG. 10 is a block diagram showing a configuration example of a radio relay station 210 of a moored airship-type HAPS 21 in the communication system of FIG. 9. It is noted that, in FIG. 9, the parts common to those in FIG. 1 described above are denoted by the same reference numerals and a description thereof is omitted. In FIG. 10, the configuration elements similar to those in FIG.5 are denoted by the same reference numerals and a description thereof is omitted. In a radio relay station of FIG. 10, similarly to FIG. 6 described above, the modem section 118 may be further disposed, and the base-station processing section 119 may be disposed instead of the repeater section 115, and similarly to FIG. 7, the edge computing section 120 may be further disposed.

In FIG. 9, a communication system of the present embodiment is provided with a moored airship-type HAPS (hereinafter referred to as "moored HAPS".) 21 for large capacity multi-cells, which is configured with a moored type airship that has no propulsive force and is moored by a mooring line 25 extending from the ground to an upper airspace area at a predetermined altitude (for example, altitude from the ground to about 5 [km]) above a metropolitan area. Since the moored HAPS 21 has a large payload (for example, 1 ton or more), in which a large-capacity battery can be installed and an electric power can be supplied from the ground with an electric power cable provided along with the mooring line 25, the long lifetime can be achieved.

Since a communication cable section 127 of FIG. 10 can communicate with a fixed base station on the ground via a communication cable made of a large-capacity optical fiber or the like provided along with the mooring line 25, it is capable of relaying communications between a large number of terminal apparatuses existing in a urban area and the ground, or relaying communications between a plurality of HAPSs configuring the above-mentioned radio communication network.

It is noted that, although FIG. 9 and FIG. 10 show the case where the floating object of the moored HAPS 21 is an airship, the floating object of the moored HAPS may be a balloon.

Furthermore, in the communication system in the present embodiment, the plurality of solar plane-type HAPSs 10 are controlled to fly over suburban and rural areas (or the sea) where the density of terminal apparatuses is lower than in metropolitan areas. At least one of the plurality of HAPSs 10 can perform a radio communication with the aforementioned moored HAPS 21 using microwaves or the like that are not easily affected by a cloud 905. The inter-HAPS communication of the plurality of HAPSs 10 may be performed using a laser light as described above, for example. The plurality of HAPSs 10 are capable of constructing an ad hoc network in which the HAPS moves to an upper airspace above a necessary place and relays radio communications of terminal apparatuses according to the presence or density of terminal apparatuses such as drones 60 and terrestrial user apparatuses in the suburban and rural areas.

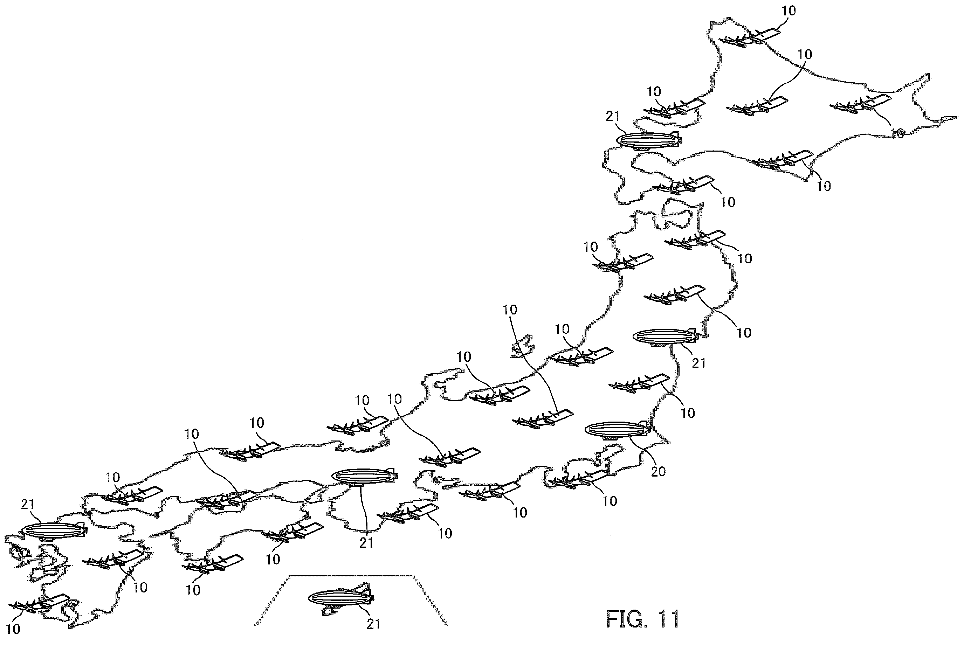

FIG. 11 is an explanatory view showing an example of a radio communication network in the embodiment, in which a plurality of solar plane-type HAPSs 10 and a moored HAPSs 21 of a moored airship-type are disposed in upper airspaces over Japan. It is noted that, FIG. 11 illustrates one arrangement example of the solar plane-type HAPSs 10 and the moored HAPS 21, the number and positions of the solar plane-type HAPSs 10 and the moored HAPS 21 are not limited to those illustrated. Although FIG. 11 shows an example in which a radio communication network configured with the plurality of HAPSs (the HAPSs 10 and the moored HAPS 21) is constructed in the upper airspace over Japan, the radio communication network configured with the plurality of HAPSs may be constructed in upper airspaces above foreign areas other than Japan, may be constructed in upper airspaces above overall areas across Japan and foreign areas, or may be constructed in upper airspaces above the sea.

In FIG. 11, the moored HAPS 21 of moored airship-type for a large capacity and multi-cell is moored and disposed in the upper airspaces above metropolitan areas (Sapporo, Sendai, Tokyo, Osaka, Fukuoka) of Hokkaido area, Tohoku area, Kanto-Koshinetsu area, Chubu-Hokuriku-Kinki area and Kyushu area. The plurality of solar plane-type HAPSs 10 are flying so as to complement the moored HAPS 21 in the upper airspace above the suburban and rural areas located between the moored HAPSs 21 in these multiple metropolitan areas. Moreover, in the example of the figure, the moored HAPS 21 is also moored and disposed in the upper airspace above the remote island of Okinawa. With these multiple solar plane-type HAPSs 10 and moored HAPSs 21, a radio communication network configured with a topology such as a three-dimensional mesh type is constructed in the upper airspace above Japan. With the radio communication network in the upper airspace above Japan, in the mobile communications of the fifth generation, in a radio communication with terminal apparatuses including devices for the IoT, the three-dimensionalized network with a low propagation delay, simultaneous connection with a widespread large number of terminals, a high-speed communication and a large system capacity per unit area can be stably realized over a wide area. In particular, by constructing the radio communication network configured with the topology such as three-dimensional mesh type, the robustness of the three-dimensionalized network can be enhanced.

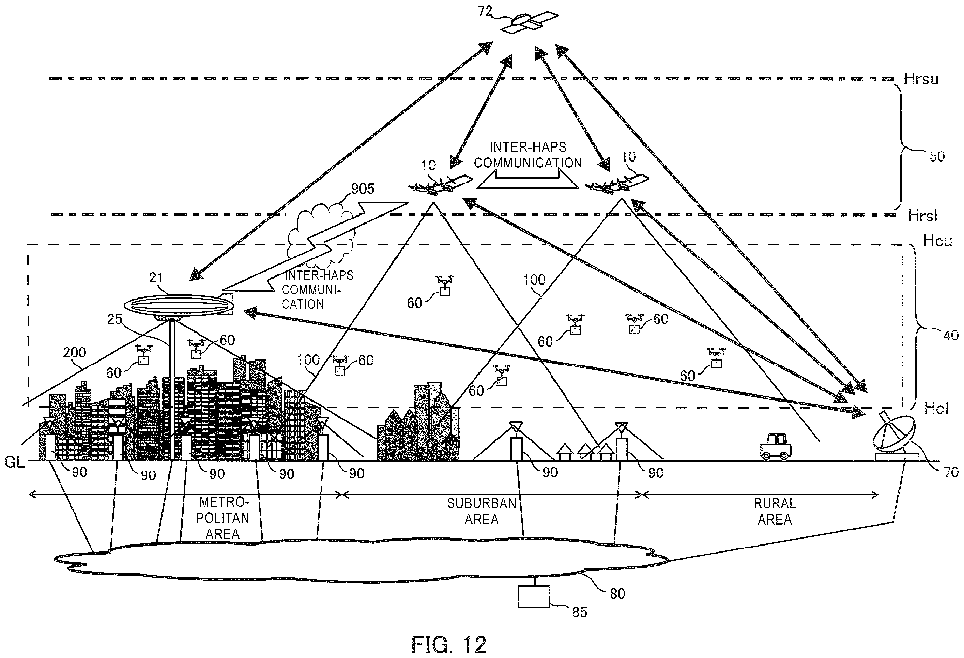

FIG. 12 is a schematic configuration diagram showing an example of an overall configuration of a communication system that realizes a three-dimensionalized network according to still another embodiment. It is noted that, in FIG. 12, the parts common to those in FIG. 9 described above are denoted by the same reference numerals and a description thereof is omitted.

In the embodiment of FIG. 12, a communication between the HAPS 10 and moored HAPS 21 and the core network of the mobile communication network 80 is performed via the feeder station 70 and the artificial satellite 72. In this case, a communication between the artificial satellite 72 and the feeder station 70 may be performed by a radio communication using radio waves such as microwaves, or may be performed by the optical communication using the laser light or the like. Furthermore, the communication between the HAPSs 10 and 21 and the artificial satellite 72 may also be performed by a radio communication using radio waves such as microwaves, or may be performed by an optical communication using the laser light or the like.

It is noted that, the process steps and configuration elements of the radio relay station of the radio relay apparatus, the feeder station, the remote control apparatus, terminal apparatus (user apparatus, mobile station, communication terminal) and the base station described in the present description can be implemented with various means. For example, these process steps and configuration elements may be implemented with hardware, firmware, software, or a combination thereof.

With respect to hardware implementation, means such as processing units or the like used for establishing the foregoing steps and configuration elements in entities (for example, radio relay station, feeder station, base station apparatus, radio relay station apparatus, terminal apparatus (user apparatus, mobile station, communication terminal), remote control apparatus, hard disk drive apparatus, or optical disk drive apparatus) may be implemented in one or more of an application-specific IC (ASIC), a digital signal processor (DSP), a digital signal processing apparatus (DSPD), a programmable logic device (PLD), a field programmable gate array (FPGA), a processor, a controller, a microcontroller, a microprocessor, a electronic device, other electronic unit, computer, or a combination thereof, which are designed so as to perform a function described in the present specification.

With respect to the firmware and/or software implementation, means such as processing units or the like used for establishing the foregoing configuration elements may be implemented with a program (for example, code such as procedure, function, module, instruction, etc.) for performing a function described in the present specification. In general, any computer/processor readable medium of materializing the code of firmware and/or software may be used for implementation of means such as processing units and so on for establishing the foregoing steps and configuration elements described in the present specification. For example, in a control apparatus, the firmware and/or software code may be stored in a memory and executed by a computer or processor. The memory may be implemented within the computer or processor, or outside the processor. Further, the firmware and/or software code may be stored in, for example, a medium capable being read by a computer or processor, such as a random-access memory (RAM), a read-only memory (ROM), a non-volatility random-access memory (NVRAM), a programmable read-only memory (PROM), an electrically erasable PROM (EEPROM), a FLASH memory, a floppy (registered trademark) disk, a compact disk (CD), a digital versatile disk (DVD), a magnetic or optical data storage unit, or the like. The code may be executed by one or more of computers and processors, and a certain aspect of functionalities described in the present specification may by executed by a computer or processor.

The description of embodiments disclosed in the present specification is provided so that the present disclosures can be produced or used by those skilled in the art. Various modifications of the present disclosures will be readily apparent to those skilled in the art and general principles defined in the present specification can be applied to other variations without departing from the scope of the present disclosures as defined by the claims.

Therefore, the present disclosures should not be limited to examples and designs described in the present specification.

### REFERENCE SIGNS LIST

- 10, 11, 12: HAPS (solar plane type)
- 20: HAPS (airship type)
- 21: HAPS (moored airship type)
- 25: mooring line
- 30: ATG station
- 40: cell-formation target airspace
- 41, 42, 43: three-dimensional cell
- 50: airspace where HAPS is located
- 60: drone
- 65: airplane
- 70: feeder station
- 72: artificial satellite
- 75: microwave power supply station
- 80: mobile communication network
- 85: remote control apparatus
- 86: server apparatus
- 100, 200, 300: beam
- 101: main wing section
- 102: solar panel (solar-power generation panel)
- 103: propeller
- 104: connecting section
- 105: pod
- 106: battery
- 107: wheel
- 108: power receiving pod
- 110, 210: radio relay station
- 111: three-dimensional (3D) cell-formation antenna section
- 112: transmission/reception section
- 113: feeder antenna section
- 114: transmission/reception section
- 115: repeater section
- 116: monitoring control section
- 117: power source section
- 118: modem section
- 119: base-station processing section
- 120: edge computing section
- 125: inter-HAPS communication section
- 126: beam control section
- 127: communication cable section

## Claims

1. A communication system comprising a plurality of radio relay stations for relaying a radio communication between a terrestrial base station (90) and a terminal apparatus,
wherein the plurality of radio relay stations includes a plurality of first radio relay stations (110, 210) capable of communicating with each other, each of the first radio relay stations (110, 210) being installed in a first floating object (10, 20) controlled so as to be located in a floating airspace with an altitude more than or equal to 11 [km] and less than or equal to 50 [km] by an autonomous control or an external control so that a three-dimensional cell is formed in a predetermined cell-formation target airspace between the first radio relay station (110, 210) and a ground level or a sea level,
wherein the plurality of radio relay stations includes a second radio relay station installed in a second floating object (21) for relaying a communication between the plurality of first radio relay stations (110, 210) and the terrestrial base station (90), the second floating object (21) being located in a floating airspace with an altitude less than or equal to 5 [km] so that a three-dimensional cell is formed in a predetermined cell-formation target airspace between the second radio relay station and the ground level or the sea level,
wherein the second floating object (21) is located in an upper airspace above a metropolitan area and is moored on a ground or sea, and
wherein the first floating object (10, 20) is controlled to be located in an upper airspace above a suburban area, a rural area or the sea where a density of terminal apparatuses is lower than that in the metropolitan area.

2. The communication system according to claim 1,
wherein the first floating object (10) is a solar plane comprising:
a wing (101) provided with a solar-power generation panel (102) for generating an electric power to be supplied to the first radio relay station; and
a rotationally drivable propeller (103) provided in the wing (101).

3. The communication system according to claim 1 or 2,
wherein the second floating object (21) is an airship comprising a battery for supplying electric power to the second radio relay station.

4. The communication system according to any one of claims 1 to 3,
wherein a communication between the second radio relay station and the terrestrial base station (90) is a wired communication, and
wherein a communication between the second radio relay station and the first radio relay station is a communication using microwaves.

5. The communication system according to any one of claims 1 to 4,
wherein the plurality of first radio relay stations (110, 210) forms a radio communication network configured with a two-dimensional or three-dimensional mesh topology.

6. The communication system according to any one of claims 1 to 5,
wherein, when any one of the plurality of first radio relay stations (110, 210) fails, another first radio relay station backs up and performs a radio relay.

7. The communication system according to any one of claims 1 to 6,
wherein a communication between the plurality of first radio relay stations is a radio communication using a laser light.

8. The communication system according to claim 7,
wherein each of the plurality of first radio relay stations controls a direction and intensity of the laser light according to a change of position relative to another neighboring first radio relay station.

9. The communication system according to claim 7 or 8,
wherein each of the plurality of first radio relay stations controls to switch another first radio relay station performing a communication using the laser light according to a change of position relative to another neighboring first radio relay station.

10. The communication system according to any one of claims 7 to 9,
wherein each of the plurality of first radio relay stations controls to reduce an intensity of the laser light in a time period of night.

11. The communication system according to any one of claims 1 to 10, further comprising a remote control apparatus (85) for controlling a position of the first radio relay station installed in the first floating object (10, 20), a direction and divergence angle of a beam formed by the first radio relay station.

12. The communication system according to any one of claims 1 to 11,
wherein an altitude of the cell-formation target airspace is less than or equal to 10 [km].

13. The communication system according to claim 12,
wherein the altitude of the cell-formation target airspace is more than or equal to 50 [m] and less than or equal to 1 [km].

## Patentansprüche

1. Ein Kommunikationssystem mit einer Vielzahl von Funk-Relaisstationen zur Weiterleitung einer Funkkommunikation zwischen einer terrestrischen Basisstation (90) und einem Endgerät,
wobei die Vielzahl von Funk-Relaisstationen eine Vielzahl von ersten Funk-Relaisstationen (110, 210) umfasst, die in der Lage sind, miteinander zu kommunizieren, wobei jede der ersten Funk-Relaisstationen (110, 210) in einem ersten schwebenden Objekt (10, 20) installiert ist, das durch eine autonome Steuerung oder eine externe Steuerung so gesteuert wird, dass es sich in einem schwebenden Luftraum mit einer Höhe von mehr als oder gleich 11 [km] und weniger als oder gleich 50 [km] befindet, so dass eine dreidimensionale Zelle in einem vorbestimmten Zielluftraum für die Zellenbildung zwischen der ersten Funkrelaisstation (110, 210) und einem Bodenniveau oder einem Meeresspiegel gebildet wird,
wobei die Vielzahl von Funk-Relaisstationen eine zweite Funkrelaisstation enthält, die in einem zweiten schwebenden Objekt (21) installiert ist, um eine Kommunikation zwischen der Vielzahl von ersten Funk-Relaisstationen (110, 210) und der terrestrischen Basisstation (90) weiterzuleiten, wobei sich das zweite schwebende Objekt (21) in einem schwebenden Luftraum mit einer Höhe von weniger als oder gleich 5 [km] befindet, so dass eine dreidimensionale Zelle in einem vorbestimmten Zielluftraum für die Zellenbildung zwischen der zweiten Funkrelaisstation und dem Bodenniveau oder dem Meeresspiegel gebildet wird,
wobei sich das zweite schwebende Objekt (21) in einem oberen Luftraum über einem Stadtgebiet befindet und am Boden oder im Meer verankert ist, und
wobei das erste schwebende Objekt (10, 20) so gesteuert wird, dass es sich in einem oberen Luftraum über einem Vorstadtgebiet, einem ländlichen Gebiet oder dem Meer befindet, wo die Dichte von Endgeräten geringer ist als in dem Stadtgebiet.

2. Das Kommunikationssystem nach Anspruch 1,
wobei das erste schwebende Objekt (10) ein Solarflugzeug ist, das Folgendes umfasst:
einen Flügel (101), der mit einem Solarstromerzeugungspaneel (102) zur Erzeugung von elektrischer Energie versehen ist, die an die erste Fuink-Relaisstation zu liefern ist; und
einen drehbar antreibbaren Propeller (103), der in dem Flügel (101) vorgesehen ist.

3. Das Kommunikationssystem nach Anspruch 1 oder 2,
wobei das zweite schwebende Objekt (21) ein Luftschiff ist, das eine Batterie zur Versorgung der zweiten Funk-Relaisstation mit elektrischer Energie aufweist.

4. Das Kommunikationssystem nach einem der Ansprüche 1 bis 3,
wobei eine Kommunikation zwischen der zweiten Funk-Relaisstation und der terrestrischen Basisstation (90) eine drahtgebundene Kommunikation ist, und
wobei eine Kommunikation zwischen der zweiten Funk-Relaisstation und der ersten Funk-Relaisstation eine Kommunikation unter Verwendung von Mikrowellen ist.

5. Das Kommunikationssystem nach einem der Ansprüche 1 bis 4,
wobei die Vielzahl der ersten Funk-Relaisstationen (110, 210) ein Funkkommunikationsnetz bildet, das mit einer zweidimensionalen oder dreidimensionalen Maschentopologie eingerichtet ist.

6. Das Kommunikationssystem nach einem der Ansprüche 1 bis 5,
wobei, wenn eine der Vielzahl von ersten Funk-Relaisstationen (110, 210) versagt, eine andere erste Funk-Relaisstation einspringt und eine Funkweiterleitung durchführt.

7. Das Kommunikationssystem nach einem der Ansprüche 1 bis 6,
wobei eine Kommunikation zwischen der Vielrzahl der ersten Funk-Relaisstationen eine Funkkommunikation unter Verwendung von Laserlicht ist.

8. Das Kommunikationssystem nach Anspruch 7,
wobei jede aus der Vielzahl der ersten Funk-Relaisstationen eine Richtung und Intensität des Laserlichts entsprechend einer Änderung der Position relativ zu einer anderen benachbarten ersten Funk-Relaisstation steuert.

9. Das Kommunikationssystem nach Anspruch 7 oder 8,
wobei jede aus der Vielzahl der ersten Funk-Relaisstationen steuert, eine andere erste Funk-Relaisstation, die eine Kommunikation unter Verwendung des Laserlichts durchführt, entsprechend einer Änderung der Position relativ zu einer anderen benachbarten ersten Funk-Relaisstation zu schalten.

10. Das Kommunikationssystem nach einem der Ansprüche 7 bis 9,
wobei jede aus der Vielzahl der ersten Funk-Relaisstationen steuert, dass eine Intensität des Laserlichts in einer Zeitperiode der Nacht reduzieren wird.

11. Das Kommunikationssystem nach einem der Ansprüche 1 bis 10, ferner aufweisend eine Fernsteuerungsvorrichtung (85) zum Steuern einer Position der ersten Funk-Relaisstation, die in dem ersten schwebenden Objekt (10, 20) installiert ist, einer Richtung und eines Divergenzwinkels eines von der ersten Funk-Relaisstation gebildeten Strahls.

12. Das Kommunikationssystem nach einem der Ansprüche 1 bis 11,
wobei eine Höhe des Zielluftraums für die Zellenbildung weniger als oder gleich 10 [km] beträgt.

13. Das Kommunikationssystem nach Anspruch 12,
wobei die Höhe des Zielluftraums für die Zellenbildung mehr als oder gleich 50 [m] und weniger als oder gleich 1 [km] beträgt.

## Revendications

1. Système de communication comprenant une pluralité de stations relais radio pour relayer une radiocommunication entre une station de base terrestre (90) et un appareil terminal,
dans lequel la pluralité de stations relais radio comporte une pluralité de premières stations relais radio (110, 210) capables de communiquer les unes avec les autres, chacune des première stations relais radio (110, 210) étant installée dans un premier objet flottant (10, 20) commandé de manière à être situé dans un espace aérien flottant avec une altitude supérieure ou égale à 11 [km] et inférieure ou égale à 50 [km] par une commande autonome ou une commande externe de sorte qu'une cellule tridimensionnelle soit formée dans un espace aérien cible de formation de cellule prédéterminé entre la première station relais radio (110, 210) et un niveau du sol ou un niveau de la mer,
dans lequel la pluralité de stations relais radio comporte une deuxième station relais radio installée dans un deuxième objet flottant (21) pour relayer une communication entre la pluralité de premières stations relais radio (110, 210) et la station de base terrestre (90), le deuxième objet flottant (21) étant situé dans un espace aérien flottant avec une altitude inférieure ou égale à 5 [km] de sorte qu'une cellule tridimensionnelle soit formée dans un espace aérien cible de formation de cellule prédéterminé entre la deuxième station relais radio et le niveau du sol ou le niveau de la mer,
dans lequel le deuxième objet flottant (21) est situé dans un espace aérien supérieur au-dessus d'une zone métropolitaine et est amarré sur un sol ou la mer, et
dans lequel le premier objet flottant (10, 20) est commandé pour être situé dans un espace aérien supérieur au-dessus d'une zone suburbaine, d'une zone rurale ou de la mer où une densité d'appareils terminaux est inférieure à celle de la zone métropolitaine.

2. Système de communication selon la revendication 1,
dans lequel le premier objet flottant (10) est un avion solaire comprenant :
une aile (101) pourvue d'un panneau de génération de puissance solaire (102) pour générer une puissance électrique à fournir à la première station relais radio ; et
une hélice (103) pouvant être entraînée en rotation prévue dans l'aile (101).

3. Système de communication selon la revendication 1 ou 2,
dans lequel le deuxième objet flottant (21) est un dirigeable comprenant une batterie pour fournir de la puissance électrique à la deuxième station relais radio.

4. Système de communication selon l'une quelconque des revendications 1 à 3,
dans lequel une communication entre la deuxième station relais radio et la station de base terrestre (90) est une communication filaire, et
dans lequel une communication entre la deuxième station relais radio et la première station relais radio est une communication à l'aide de micro-ondes.

5. Système de communication selon l'une quelconque des revendications 1 à 4,
dans lequel la pluralité de premières stations relais radio (110, 210) forme un réseau de radiocommunication configuré avec une topologie de maillage bidimensionnel ou tridimensionnel.

6. Système de communication selon l'une quelconque des revendications 1 à 5,
dans lequel, lorsque l'une quelconque de la pluralité de premières stations relais radio (110, 210) est défaillante, une autre première station relais radio vient en soutien et réalise un relais radio.

7. Système de communication selon l'une quelconque des revendications 1 à 6,
dans lequel une communication entre la pluralité de premières stations relais radio est une radiocommunication à l'aide d'une lumière laser.

8. Système de communication selon la revendication 7,
dans lequel chacune de la pluralité de premières stations relais radio commande une direction et une intensité de la lumière laser selon un changement de position par rapport à une autre première station relais radio voisine.

9. Système de communication selon la revendication 7 ou 8,
dans lequel chacune de la pluralité de premières stations relais radio commande pour commuter une autre première station relais radio réalisant une communication à l'aide de la lumière laser selon un changement de position par rapport à une autre première station relais radio voisine.

10. Système de communication selon l'une quelconque des revendications 7 à 9,
dans lequel chacune de la pluralité de premières stations relais radio commande pour réduire une intensité de la lumière laser dans une période nocturne.

11. Système de communication selon l'une quelconque des revendications 1 à 10, comprenant en outre un appareil de télécommande (85) pour commander une position de la première station relais radio installée dans le premier objet flottant (10, 20), une direction et un angle de divergence d'un faisceau formé par la première station relais radio.

12. Système de communication selon l'une quelconque des revendications 1 à 11,
dans lequel une altitude de l'espace aérien cible de formation de cellule est inférieure ou égale à 10 [km].

13. Système de communication selon la revendications 12,
dans lequel l'altitude de l'espace aérien cible de formation de cellule est supérieure ou égale à 50 [m] et inférieure ou égale à 1 [km].
